(19) Europäisches Patentamt / European Patent Office / Office européen des brevets

(11) **EP 2 787 597 A1**

(12) **EUROPEAN PATENT APPLICATION**
published in accordance with Art. 153(4) EPC

(43) Date of publication:
08.10.2014 Bulletin 2014/41

(21) Application number: 11876687.2

(22) Date of filing: 28.11.2011

(51) Int Cl.:
*H02J 7/04* (2006.01)    *H02J 7/00* (2006.01)
*H02J 7/10* (2006.01)

(86) International application number:
PCT/JP2011/077364

(87) International publication number:
WO 2013/080272 (06.06.2013 Gazette 2013/23)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventor: **KINOMURA, Shigeki
Toyota-shi
Aichi 471-8571 (JP)**

(74) Representative: **TBK
Bavariaring 4-6
80336 München (DE)**

(54) **CHARGING SYSTEM AND CHARGING RESERVATION METHOD**

(57) A house ECU executes a program when it is the time to set a scheduled time (YES in S100), including the step (S104) of transmitting an end time of external charging to a vehicle in the case where the end time has been input by a user (YES in S102), and the step (S108) of determining a start time in the case where the house ECU has received a required charging time from a vehicle ECU (YES in S106). The vehicle ECU executes a program when it is the time to set a scheduled time (YES in S200), including the step (S204) of calculating the required charging time in the case where the vehicle ECU has received the end time from the house ECU (YES in S202), and the step (S206) of transmitting the required charging time.

FIG.4

EP 2 787 597 A1

**Description**

TECHNICAL FIELD

The present invention relates to a technique for charging a power storage device mounted on a vehicle by means of a charging device located outside the vehicle, in accordance with scheduling information.

BACKGROUND ART

Japanese Patent Laying-Open No. 2009-136109 (PTL 1) discloses a technique for adjusting a charging schedule. Specifically, in the case where a power storage device mounted on a vehicle is to be charged by means of a charging device located outside the vehicle, a required amount of charging power is calculated based on the state of charge of the power storage device and an expected amount of power consumption and, based on the calculated amount of charging power, the charging schedule is adjusted.

CITATION LIST

PATENT LITERATURE

PTL 1: Japanese Patent Laying-Open No. 2009-136109

SUMMARY OF INVENTION

TECHNICAL PROBLEM

In order for the charging device to adjust the charging schedule, it is necessary to know, with high accuracy, a required amount of charging power for charging the power storage device. Depending on the type of the vehicle connected to the charging device, however, information which is necessary for the charging device to know with high accuracy the required amount of charging power may not be provided, resulting in a problem that the charging device cannot know with high accuracy the required amount of charging power.

An object of the present invention is to provide a charging system and a charging scheduling method by which a required amount of charging power for charging a power storage device mounted on a vehicle is calculated with high accuracy.

SOLUTION TO PROBLEM

A charging system according to an aspect of the present invention includes: a vehicle including a power storage device for supplying electric power to an electric motor serving as a driving source, and a first control device for controlling charging of the power storage device; and a charging device including a power supply provided outside the vehicle, and a second control device for controlling external charging of the power storage device by means of the power supply. In a case where an end time of the external charging is input to the second control device, the second control device transmits the input end time to the first control device. In a case where the first control device receives the end time from the second control device, the first control device calculates a required charging time which is required for the external charging.

Preferably, the first control device transmits the calculated required charging time to the second control device. The second control device determines a start time of the external charging based on the end time and the required charging time received from the first control device, and starts the external charging at the determined start time.

More preferably, the first control device transmits the calculated required charging time to the second control device, and the second control device performs a process for managing supply and demand of electric power for an electrical device connected to the power supply, based on the end time and the required charging time received from the first control device.

More preferably, the first control device determines a start time of the external charging based on the end time and the calculated required charging time.

More preferably, the first control device calculates the required charging time based on at least one of a remaining capacity of the power storage device, an upper limit of charging power that can be supplied from the charging device to the power storage device, an upper limit of charging power that can be received by the power storage device, and a full charging capacity of the power storage device.

More preferably, the second control device determines the end time based on a scheduled departure time of the vehicle that is input by a user.

More preferably, the charging device is a part of a power management system for adjusting power consumption of at least one of a plurality of electrical devices connected to the power supply.

A charging scheduling method according to another aspect of the present invention uses a charging system including: a vehicle including a power storage device for supplying electric power to an electric motor serving as a driving source and a first control device for controlling charging of the power storage device; and a charging device including a power supply provided outside the vehicle and a second control device for controlling external charging of the power storage device by means of the power supply. The charging scheduling method includes the steps of: transmitting by the second control device, in a case where an end time of the external charging is input to the second control device, the input end time to the first control device; and calculating by the first control device, in a case where the first control device receives the end time from the second control device, a required charging time which is required for the external charging.

ADVANTAGEOUS EFFECTS OF INVENTION

In accordance with the present invention, the second control device transmits an input end time of external charging to the first control device, and the first control device calculates the required charging time which is required for external charging. Accordingly, the need can be eliminated for the second control device to know the information which is based on the state of the vehicle (such as the state of the power storage device) and necessary for calculating the required charging time (the information is namely the information by which the required amount of charging power can be identified). Since the first control device knows the state of the vehicle which is necessary for calculating the required charging time, the first control device can calculate the required charging time with high accuracy. Thus, based on the required charging time calculated by the first control device, the charging schedule can appropriately be adjusted. Accordingly, the charging system and the charging scheduling method can be provided by which a required amount of charging power for charging the power storage device mounted on the vehicle is calculated with high accuracy.

BRIEF DESCRIPTION OF DRAWINGS

Fig. 1 is an overall block diagram of a charging system according to an embodiment.
Fig. 2 is an example detailed diagram of the charging system in Fig. 1.
Fig. 3 is a time chart for illustrating a sequence of external charging.
Fig. 4 is a flowchart showing a control structure of a program executed by each of a house ECU and a vehicle ECU.
Fig. 5 is a flowchart showing a control structure of a program executed by the house ECU.

DESCRIPTION OF EMBODIMENTS

In the following, an embodiment of the present invention will be described with reference to the drawings. In the description below, the same components are denoted by the same reference characters, and they are named and function identically. Therefore, a detailed description of them will not be repeated.

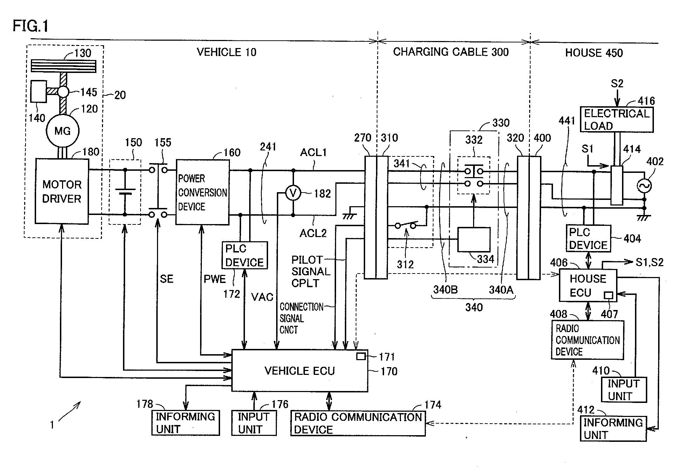

As shown in Fig. 1, a charging system 1 according to the present embodiment includes a vehicle 10 and a house 450 serving as a charging device provided outside vehicle 10. Vehicle 10 and house 450 are connected by a charging cable 300.

The configuration of vehicle 10 is not particularly limited as long as the vehicle is capable of running using electric power from a chargeable power storage device. Vehicle 10 includes for example hybrid vehicle, electric vehicle, and the like. The vehicle may also include vehicles caused to run by an internal combustion engine as well as fuel-cell vehicle for example as long as the vehicle is mounted with a chargeable power storage device.

Vehicle 10 includes an inlet 270, a power conversion device 160, a relay 155, a power storage device 150, a drive unit 20, a vehicle ECU (Electronic Control Unit) 170, a first PLC (Power Line Communications) device 172, a radio communication device 174, an input unit 176, an informing unit 178, and a voltage sensor 182.

Drive unit 20 includes a motor driver 180, a motor generator (hereinafter also referred to as "MG (Motor Generator)") 120, a drive wheel 130, an engine 140, and a power split device 145.

To inlet 270, a connector 310 provided to charging cable 300 is connected.

Power conversion device 160 is connected to inlet 270 by electric power lines ACL1, ACL2. Power conversion device 160 is also connected to power storage device 150 via relay 155. Power conversion device 160 converts, based on control signal PWE from vehicle ECU 170, AC power supplied from a system power supply 402 of house 450 to DC power with which power storage device 150 can be charged, and supplies the AC power to power storage device 150.

Power storage device 150 is a power storage element configured to be chargeable and dischargeable. Power storage device 150 may for example be configured to include a secondary battery such as lithium-ion battery, nickel-metal hydride battery, or lead-acid battery, or a power storage element such as electric double-layer capacitor.

Power storage device 150 stores DC power supplied from power conversion device 160. Power storage device 150 is connected to motor driver 180 which drives MG 120. Power storage device 150 supplies DC power to be used for generating driving power for the vehicle to run. Power storage device 150 also stores electric power generated by MG 120.

Power storage device 150 further includes a voltage sensor (not shown) for detecting the voltage of power storage device 150 and a current sensor (not shown) for detecting electric current which is input to and output from power storage device 150. The voltage sensor transmits a signal representing the detected voltage to vehicle ECU 170. The current sensor transmits a signal representing the detected current to vehicle ECU 170.

Motor driver 180 is connected to power storage device 150 and MG 120. Motor driver 180 is controlled by vehicle ECU 170 to convert electric power supplied from power storage device 150 to electric power for driving MG 120. Motor driver 180 includes for example a three-phase inverter.

MG 120 is connected to drive wheel 130 via motor driver 180 and power split device 145. MG 120 receives electric power supplied from motor driver 180 to generate driving power for causing vehicle 10 to run. MG 120 also receives rotating force from drive wheel 130 to generate AC power and thereby generate regenerative braking force. Vehicle ECU 170 transmits to motor driver 180 a regenerative torque command value which is generated in accordance with the state of vehicle 10 to thereby control the regenerative braking force. MG 120 is for example a three-phase AC electric motor generator including a rotor in which permanent magnets are embedded and a stator having Y-connected three-phase coils.

MG 120 is also connected to engine 140 via power split device 145. Vehicle ECU 170 controls vehicle 10 so that an optimum ratio is satisfied between the driving power of engine 140 and the driving power of MG 120. MG 120 is driven by engine 140 to thereby operate as an electric generator. The electric power generated by MG 120 is stored in power storage device 150. The electric power generated by MG 120 may be supplied, together with electric power of power storage device 150, through inlet 270 to an electrical device connected to system power supply 402 of house 450.

Voltage sensor 182 is connected between electric power lines ACL1 and ACL2 for detecting voltage VAC between electric power lines ACL1 and ACL2. Voltage sensor 182 transmits a signal representing voltage VAC to vehicle ECU 170.

Relay 155 is provided on a path connecting power conversion device 160 and power storage device 150. Relay 155 is controlled by control signal SE from vehicle ECU 170 for switching power conversion device 160 and power storage device 150 between the state of supplying electric power and the state of cutting off the supply of electric power. While relay 155 is provided separately from power storage device 150 or power conversion device 160 in the present embodiment, relay 155 may be provided in power storage device 150 or power conversion device 160.

Vehicle ECU 170 includes a CPU (Central Processing Unit) (not shown in Fig. 1) and a memory 171 functioning as a storage device, input/output buffer, or the like. Vehicle ECU 170 receives a signal from each sensor or the like and transmits a control command to each relevant device and also controls vehicle 10 and relevant devices each. Control of them is not limited to processing by software, and may be performed by means of dedicated hardware (electronic circuit).

Vehicle ECU 170 receives connection signal CNCT and pilot signal CPLT from charging cable 300 through inlet 270. Vehicle ECU 170 also receives the value of detected voltage VAC from voltage sensor 182.

Vehicle ECU 170 receives, from sensors (not shown) provided in power storage device 150, detected values concerning current, voltage, and temperature, and calculates the SOC (State of Charge) representing a remaining capacity of power storage device 150.

Based on these information items, vehicle ECU 170 controls power conversion device 160 and relay 155 for example for charging power storage device 150.

First PLC device 172 is connected to an electric power line 241. First PLC device 172 performs power line communication with a second PLC device 404 connected to an electric power line 441 of house 450. For the power line communication between first PLC device 172 and second PLC device 404, electric power lines 241, 341, 441 are used as a communication channel. The power line communication between first PLC device 172 and second PLC device 404 is enabled by connection of charging cable 300 to both vehicle 10 and house 450, namely connection of a receptacle 400 and a plug 320 and connection of connector 310 and inlet 270.

First PLC device 172 includes a modem for example. In the case where first PLC device 172 receives a high-frequency signal from second PLC device 404 of house 450 through electric power line 241, first PLC device 172 demodulates data from the received high-frequency signal. First PLC device 172 transmits the demodulated data to vehicle ECU 170.

In the case where first PLC device 172 receives data from vehicle ECU 170, first PLC device 172 modulates the received data to a high-frequency signal. First PLC device 172 outputs to electric power line 241 the high-frequency signal to which the data is modulated.

In the case for example where the frequency of AC power of system power supply 402 is 50 Hz or 60 Hz, the frequency of the high-frequency signal transmitted and received between first PLC device 172 and second PLC device 404 for power line communication is for example several MHz to several tens of MHz.

Radio communication device 174 performs radio communication with a radio communication device located outside vehicle 10. In the present embodiment, radio communication device 174 performs radio communication with a radio communication device 408 in house 450.

For the radio communication, a specification for radio communication such as Zigbee (registered trademark), Bluetooth (registered trademark), IEEE 802.11, infrared communication, or the like is used. The specification, however, is not particularly limited to these specifications.

Input unit 176 serves as an interface on vehicle 10 for receiving instructions from a user. Input unit 176 transmits, to vehicle ECU 170, signals corresponding to instructions received from the user.

In the present embodiment, input unit 176 receives for example input of information about the start time and/or the end time of external charging desired by a user (the information will hereinafter be referred to as scheduling information). In the present embodiment, external charging is charging of power storage device 150 of vehicle 10 by means of system power supply 402. The external charging operation which varies depending on whether or not external charging is scheduled will be described later herein.

Scheduling information can be input for example by direct input of numerical values corresponding to a certain time, input for changing the time indicated on a display to a desired time, input for selecting one of multiple times indicated on the display, or input by means of a remote controller or mobile terminal.

Input unit 176 may for example be made up of buttons, dial, or the like, or made up of icons or the like indicated on a touch panel, or may be a receiver receiving, from a remote controller or mobile terminal, data including scheduling information.

In the present embodiment, vehicle ECU 170 identifies scheduling information based on a signal which is received from input unit 176, and causes the identified scheduling information to be stored in memory 171.

Informing unit 178 informs a user in vehicle 10 of predetermined information. In the present embodiment, informing unit 178 informs the user of predetermined information by means of a display formed for example of an LCD (Liquid Crystal Display), LED (Light Emitting Diode) or the like. Informing unit 178 may also inform the user of the predetermined information by means of for example a sound generator generating sound or voice.

Charging cable 300 includes connector 310 provided at an end on the vehicle's side, plug 320 provided at an end on the system power supply's side, a charging circuit interrupt device (hereinafter also referred to as "CCID") 330, and an electric power line unit 340 connecting the devices to each other for input and output of electric power and control signals. Charging cable 300 may belong to vehicle 10 or may belong to house 450.

Electric power line unit 340 includes an electric power line unit 340A connecting plug 320 and CCID 330 to each other and an electric power line unit 340B connecting connector 310 and CCID 330 to each other. Electric power line unit 340 also includes electric power line 341 for transmitting electric power from system power supply 402.

Plug 320 of charging cable 300 is connected to receptacle 400 of system power supply 402 of house 450 when external charging is to be performed. Furthermore, when external charging is to be performed, connector 310 of charging cable 300 is connected to inlet 270 provided in the body of vehicle 10. Plug 320 and receptacle 400 are thus connected together and connector 310 and inlet 270 are thus connected together to thereby transmit electric power from system power supply 402 to vehicle 10. Plug 320 is attachable to and detachable from receptacle 400. Connector 310 is attachable to and detachable from inlet 270.

In connector 310, a connection detecting circuit 312 is provided. Connection detecting circuit 312 detects the state of connection between inlet 270 and connector 310. Connection detecting circuit 312 transmits connection signal CNCT representing the state of connection to vehicle ECU 170 of vehicle 10 through inlet 270.

Connection detecting circuit 312 may be configured in the form of a limit switch as shown in Fig. 1, so that the potential of connection signal CNCT becomes the ground potential (0V) when connector 310 is connected to inlet 270. Alternatively, connection detecting circuit 312 may be configured in the form of a resistor (not shown) having a predetermined resistance value, so that the potential of connection signal CNCT is decreased to a predetermined potential when they are connected to each other. In both cases, vehicle ECU 170 detects the potential of connection signal CNCT to thereby detect that connector 310 is connected to inlet 270.

CCID 330 includes a CCID relay 332 and a control pilot circuit 334. CCID relay 332 is provided on electric power line 341 in charging cable 300. CCID relay 332 is controlled by control pilot circuit 334. When CCID relay 332 becomes an open state, the electrical circuit of electric power line 341 is broken. On the contrary, when CCID relay 332 becomes a closed state, electric power is supplied from system power supply 402 to vehicle 10.

Control pilot circuit 334 outputs pilot signal CPLT to vehicle ECU 170 through connector 310 and inlet 270. This pilot signal CPLT is a signal used by control pilot circuit 334 for informing vehicle ECU 170 of the rated current of charging cable 300. Pilot signal CPLT is also used as a signal for vehicle ECU 170 to remotely manipulate CCID relay 332 based on the potential of pilot signal CPLT manipulated by vehicle ECU 170. Based on a change of the potential of pilot signal CPLT, control pilot circuit 334 controls CCID relay 332.

Details of the above-described pilot signal CPLT and connection signal CNCT as well as respective shapes of inlet 270 and connector 310, arrangement of terminals, and the like have been standardized for example by the U.S. SAE (Society of Automotive Engineers) and the Japan Electric Vehicle Association.

House 450 includes receptacle 400, system power supply 402, second PLC device 404, house ECU 406, radio communication device 408, an input unit 410, an informing unit 412, a switch unit 414, an electrical load 416, and electric power line 441.

In the present embodiment, system power supply 402 and house ECU 406 that are provided in house 450 correspond to a charging device for externally charging power storage device 150 of vehicle 10 in cooperation with vehicle ECU 170. This charging device is a part of a power management system for adjusting power consumption of at least one of a plurality of electrical devices connected to system power supply 402 in house 450.

Regarding the present embodiment, system power supply 402 is described as an AC power supply. System power supply 402, however, may for example be a DC power supply.

Second PLC device 404 is connected to electric power line 441. Second PLC device 404 performs power line communication with first PLC device 172.

Second PLC device 404 includes a modem for example. In the case where second PLC device 404 receives a high-frequency signal from first PLC device 172 of vehicle 10 through electric power line 441, second PLC device 404 demodulates data from the received high-frequency signal. Second PLC device 404 transmits the demodulated data to house ECU 406.

In the case where second PLC device 404 receives data from house ECU 406, second PLC device 404 modulates the received data to a high-frequency signal. Second PLC device 404 outputs to electric power line 441 the high-frequency signal to which the data is modulated.

House ECU 406 includes a CPU (not shown) and a memory 407 functioning as a storage device, input/output buffer, or the like. When it becomes possible to communicate with vehicle ECU 170, house ECU 406 receives a signal from each sensor or the like provided in vehicle 10 and also outputs a control command to each relevant device mounted on vehicle 10, through vehicle ECU 170, and also controls relevant devices each. Control of them is not limited to processing by software, and may be performed by means of dedicated hardware (electronic circuit).

Radio communication device 408 performs radio communication with a radio communication device located outside or inside house 450. In the present embodiment, radio communication device 408 performs radio communication with radio communication device 174 of vehicle 10.

Vehicle ECU 170 and house ECU 406 may communicate with each other when receptacle 400 and plug 320 are connected together and connector 310 and inlet 270 are connected together, or when vehicle 10 and house 450 are located in a range in which vehicle 10 and house 450 are capable of communicating with each other.

In the present embodiment, when receptacle 400 and plug 320 are connected together and connector 310 and inlet 270 are connected together, external charging is performed through cooperation between vehicle ECU 170 and house ECU 406.

Vehicle ECU 170 and house ECU 406 may communicate by radio with each other using radio communication device 174 and radio communication device 408, when receptacle 400 and plug 320 are connected together and connector 310 and inlet 270 are connected together.

Alternatively, vehicle ECU 170 and house ECU 406 may communicate with each other by power line communication using first PLC device 172 and second PLC device 404, when receptacle 400 and plug 320 are connected together and connector 310 and inlet 270 are connected together.

Alternatively, vehicle ECU 170 and house ECU 406 may communicate with each other by means of both the radio communication and the power line communication as described above, when receptacle 400 and plug 320 are connected together and connector 310 and inlet 270 are connected together.

The communication method is not particularly limited to the above-described methods. For example, as indicated by the broken line in Fig. 1, a communication line may be provided that connects vehicle ECU 170 and house ECU 406 through inlet 270, connector 310, plug 320, and receptacle 400. Vehicle ECU 170 and house ECU 406 may communicate with each other using this communication line, when receptacle 400 and plug 320 are connected together and connector 310 and inlet 270 are connected together.

Input unit 410 serves as an interface in house 450 for receiving instructions from a user. Input unit 410 transmits, to vehicle ECU 406, signals corresponding to received instructions.

In the present embodiment, input unit 410 receives for example input of scheduling information from a user. The scheduling information can be input for example by direct input of numerical values corresponding to a certain time, input for changing the time indicated on a display to a desired time, input for selecting one of multiple times indicated on the display, or input by means of a remote controller or mobile terminal.

Input unit 410 may for example be made up of buttons, dial, or the like, or made up of icons or the like indicated on a touch panel, or may be a receiver receiving, from a remote controller or mobile terminal, data including scheduling information.

In the present embodiment, house ECU 406 identifies scheduling information based on a signal which is received from input unit 410, and causes the identified scheduling information to be stored in memory 407.

Informing unit 412 informs a user in house 450 of predetermined information. In the present embodiment, informing unit 412 informs the user of predetermined information by means of a display formed for example of an LCD, LED, or the like. Informing unit 178 may also inform the user of the predetermined information by means of for example a sound generator generating sound or voice.

Switch unit 414 switches, based on control signal S1 from house ECU 406, one of a first state and a second state to the other state. Here, the first state is a state where electrical load 416 and system power supply 402 are connected in parallel to electric power line 441, and the second state is a state where system power supply 402 is disconnected.

In the case of the first state, electric power of system power supply 402 is supplied to electrical load 416. Furthermore, the electric power of system power supply 402 may also be supplied to vehicle 10 when receptacle 400 and plug 320 are connected together and connector 310 and inlet 270 are connected together.

In contrast, in the case of the second state, vehicle 10 is a power source for electrical load 416. Specifically, house ECU 406 controls the power conversion device through vehicle ECU 170 so that DC power of power storage device 150 is converted to AC power, and controls CCID relay 332 so that the AC power into which the DC power has been converted is supplied through electric power lines 241, 341, 441 to electrical load 416.

Electrical load 416 is an electrical device provided in house 450 or in the premises of house 450. Regarding electrical load 416, its operation may be controlled for example in accordance with control signal S2 from house ECU 406 so that its power consumption and the like are adjusted. House ECU 406 may control switch unit 414 for example so that the first state is switched to the second state in a predetermined period including a part or the whole of a time zone in which the peak is included of the demand for electric power of a supplier (power company for example) of system power supply 402.

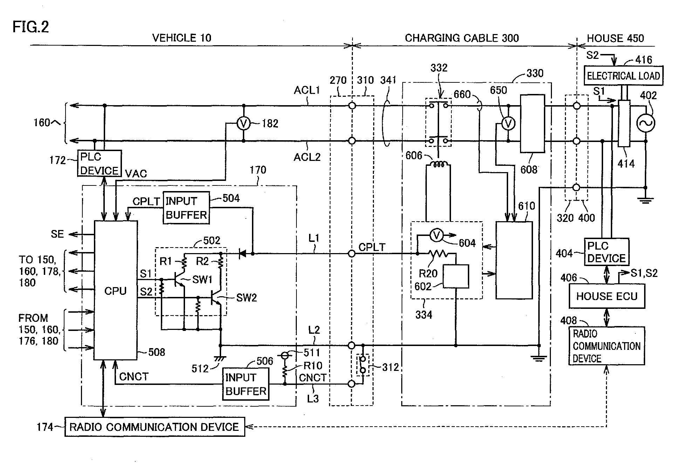

Fig. 2 is a diagram for illustrating in more detail the configuration of charging system 1 shown in Fig. 1. Regarding Fig. 2, the description of the element denoted by the same reference character as that of the corresponding element in Fig. 1 will not be repeated.

Referring to Fig. 2, CCID 330 further includes, in addition to CCID relay 332 and control pilot circuit 334, an electromagnetic coil 606, an electrical leakage detector 608, a CCID control unit 610, a voltage sensor 650, and a current sensor 660. Control pilot circuit 334 includes an oscillation device 602, a resistor R20, and a voltage sensor 604.

CCID control unit 610 includes a CPU, a storage device, and an input/output buffer (they are not shown). CCID control unit 610 receives/outputs signals from/to the sensors each and/or control pilot circuit 334, and also controls a charging operation of charging cable 300.

When the potential of pilot signal CPLT detected by voltage sensor 604 is a prescribed potential (12 V for example), oscillation device 602 outputs the signal which is not oscillating. When the potential of pilot signal CPLT becomes a potential (9 V for example) lower than the above-indicated prescribed potential, oscillation device 602 is controlled by CCID control unit 610 to output the signal oscillating at a prescribed frequency (1 kHz for example) and with a prescribed duty cycle.

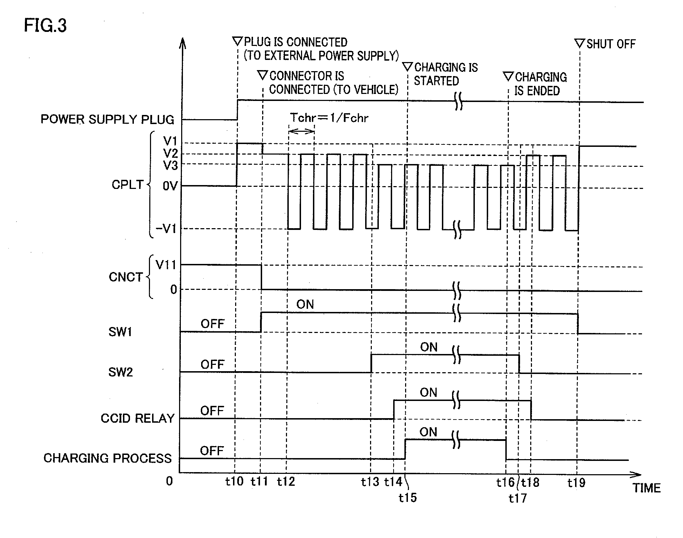

The potential of pilot signal CPLT is manipulated by vehicle ECU 170 as described later herein in connection with Fig. 3. The duty cycle is set based on the rated current that can be supplied from system power supply 402 to vehicle 10 through charging cable 300.

Pilot signal CPLT is caused to oscillate with a prescribed oscillation period when the potential of pilot signal CPLT becomes lower than the prescribed potential as described above. The pulse width of pilot signal CPLT is set based on the rated current that can be supplied from system power supply 402 through charging cable 300 to vehicle 10. Namely, the duty represented by the ratio of the pulse width to the oscillation period of pilot signal CPLT is used by control pilot circuit 334 to inform vehicle ECU 170 of vehicle 10 of the rated current.

The rated current is defined for each charging cable, and thus charging cables 300 of different kinds have respective rated currents different from each other. Therefore, the duty of pilot signal CPLT varies depending on charging cable 300.

Vehicle ECU 170 can detect the rated current that can be supplied to vehicle 10 through charging cable 300, based on the duty of pilot signal CPLT received through a control pilot line L1.

When the potential of pilot signal CPLT is further lowered (6 V for example) by vehicle ECU 170, control pilot circuit 334 supplies current to electromagnetic coil 606. In response to supply of the current from control pilot circuit 334, electromagnetic coil 606 generates electromagnetic force to close the contact of CCID relay 332 and generate an electrically conductive state.

Electrical leakage detector 608 is provided in CCID 330 so that it is located on electric power line 341 of charging cable 300 for detecting whether or not electrical leakage occurs. Specifically, electrical leakage detector 608 detects the equilibrium state of currents flowing in opposite directions in a pair of electric power lines 341. When the equilibrium state is lost, electrical leakage detector 608 detects occurrence of electrical leakage. When electrical leakage detector 608 detects electrical leakage, supply of electric power to electromagnetic coil 606 is cut off, so that the contact of CCID relay 332 is opened and an electrically non-conductive state is generated, which, however, is not particularly illustrated in the drawings.

When plug 320 is inserted in receptacle 400, voltage sensor 650 detects the power supply voltage transmitted from system power supply 402, and transmits the detected value of the voltage to CCID control unit 610. Current sensor 660 also detects the charging current flowing in electric power line 341, and transmits the detected value of the current to CCID control unit 610.

Connection detecting circuit 312 included in connector 310 is for example a limit switch as described above. The contact of the limit switch is closed when connector 310 is connected to inlet 270, and the contact is opened when connector 310 is disconnected from inlet 270.

When connector 310 is disconnected from inlet 270, a voltage signal determined by the voltage of a power supply node 511 and a pull-up resistor R10 that are included in vehicle ECU 170 is generated as connection signal CNCT on a connection signal line L3. When connector 310 is connected to inlet 270, connection signal line L3 and a ground line L2 are short-circuited and accordingly the potential of connection signal line L3 becomes the ground potential (0 V).

Connection detecting circuit 312 may also be a resistor (not shown). In this case, when connector 310 is connected to inlet 270, a voltage signal determined by the voltage of power supply node 511, pull-up resistor R10, and the resistor serving as the connection detecting circuit is generated on connection signal line L3.

Regardless of whether connection detecting circuit 312 is the limit switch or the resistor as described above, the potential generated on connection signal line L3 (namely the potential of connection signal CNCT) varies depending on whether connector 310 is connected to or disconnected from inlet 270. Therefore, vehicle ECU 170 can detect the state of connection of connector 310 by detecting the potential of connection signal line L3.

In vehicle 10, vehicle ECU 170 further includes, in addition to the above-described power supply node 511 and pull-up resistor R10, a resistor circuit 502, input buffers 504, 506, and a CPU 508. Input buffers 504, 506 are included in memory 171 in Fig. 1.

Resistor circuit 502 includes pull-down resistors R1, R2 and switches SW1, SW2. Pull-down resistor R1 and switch SW1 are connected in series between control pilot line L1 by which pilot signal CPLT is transmitted and a vehicle earth 512. Pull-down resistor R2 and switch SW2 are also connected in series between control pilot line L1 and vehicle earth 512. Switches SW1, SW2 are controlled in accordance with control signals S1, S2 respectively from CPU 508 to become electrically conductive or non-conductive.

Resistor circuit 502 is a circuit for vehicle 10 to manipulate the potential of pilot signal CPLT.

Input buffer 504 receives pilot signal CPLT of control pilot line L1 and outputs the received pilot signal CPLT to CPU 508. Input buffer 506 receives connection signal CNCT from connection signal line L3 connected to connection detecting circuit 312 of connector 310, and outputs the received connection signal CNCT to CPU 508. As described above, a voltage is applied to signal line L3 by vehicle ECU 170, and connection of connector 310 to inlet 270 causes the potential of connection signal CNCT to change. CPU 508 detects this potential of connection signal CNCT to thereby detect the state of connection of connector 310.

CPU 508 receives pilot signal CPLT and connection signal CNCT from input buffers 504 and 506 respectively.

CPU 508 detects the potential of connection signal CNCT and accordingly detects the state of connection of connector 310.

CPU 508 also detects the state of oscillation and the duty cycle of pilot signal CPLT to thereby detect the rated current of charging cable 300 as described above.

Based on the potential of connection signal CNCT and the state of oscillation of pilot signal CPLT, CPU 508 controls control signals S1, S2 for switches SW1, SW2 to thereby manipulate the potential of pilot signal CPLT. In this way, CPU 508 can remotely control CCID relay 332. Electric power is then transmitted from system power supply 402 to vehicle 10 through charging cable 300.

Referring to Figs. 1 and 2, when the contact of CCID relay 332 is closed, AC power is supplied from system power supply 402 to power conversion device 160 and preparation for charging power storage device 150 from system power supply 402 is thus completed. CPU 508 outputs control signal PWE to power conversion device 160 to thereby cause AC power from system power supply 402 to be converted to DC power with which power storage device 150 can be charged. CPU 508 outputs control signal SE to close the contact of relay 155 and thereby cause power storage device 150 to be charged.

Fig. 3 is a time chart for illustrating a sequence of external charging by the charging system in Fig. 2. On the horizontal axis of Fig. 3, time is indicated. On the vertical axis thereof, the state of connection of plug 320, the potential of pilot signal CPLT, the potential of connection signal CNCT, the states of switches SW1, SW2, the state of CCID relay 332, and the state of execution of charging process are indicated.

Referring to Figs. 2 and 3, until time t10, charging cable 300 is connected to none of vehicle 10 and system power supply 402. In this state, switches SW1, SW2 and CCID relay 332 are in the OFF state and the potential of pilot signal CPLT is 0 V. The potential of connection signal CNCT is V11 (> 0V).

At time t10, plug 320 of charging cable 300 is connected to receptacle 400 of system power supply 402. In response to this, control pilot circuit 334 receiving electric power from system power supply 402 generates pilot signal CPLT.

At this time t10, connector 310 of charging cable 300 is not connected to inlet 270. The potential of pilot signal CPLT is V1 (12 V for example) and pilot signal CPLT is in the non-oscillating state.

At time t11, connector 310 is connected to inlet 270. In response to this, connection detecting circuit 312 causes the potential of connection signal CNCT to decrease.

CPU 508 detects the decrease of the potential of connection signal CNCT to thereby detect that connector 310 and inlet 270 are connected. Accordingly, CPU 508 activates control signal S1 to cause switch SW1 to be turned on. Then, pull-down resistor R1 of resistor circuit 502 causes the potential of pilot signal CPLT to decrease to V2 (9 V for example).

At time t12, CCID control unit 610 detects that the potential of pilot signal CPLT has decreased to V2. Accordingly, CCID control unit 610 causes pilot signal CPLT to oscillate with an oscillation period Tchr (= 1/Fchr) where Fchr is an oscillation frequency.

When CPU 508 detects that pilot signal CPLT is oscillating, CPU 508 accordingly detects the rated current of charging cable 300 based on the duty of pilot signal CPLT as described above.

Then, CPU 508 activates control signal S2 and causes switch SW2 to turn on for starting a charging operation. Accordingly, pull-down resistor R2 causes the potential of pilot signal CPLT to decrease to V3 (6 V for example) (time t13 in Fig. 3).

When CCID control unit 610 detects that the potential of pilot signal CPLT has decreased to V3, the contact of CCID relay 332 is closed at time t14, and electric power from system power supply 402 is transmitted to vehicle 10 through charging cable 300.

After this, when AC voltage VAC is detected in vehicle 10, CPU 508 causes the contact of relay 155 (Fig. 1) to be closed, and power conversion device 160 (Fig. 1) is controlled to thereby start charging of power storage device 150 (Fig. 1) (time t15 in Fig. 3).

Charging of power storage device 150 thus proceeds and the fact that a full state of charge of power storage device 150 is reached is detected, CPU 508 causes the charging operation to end (time t16 in Fig. 3). Then, CPU 508 inactivates control signal S2 and causes switch SW2 to become electrically non-conductive (time tr17 in Fig. 3). Accordingly, the potential of pilot signal CPLT becomes V2 and thus the charging process is stopped. Meanwhile, CCID relay 332 is caused to become electrically non-conductive (time t18). Thus, the charging operation comes to an end. After this, CPU 508 inactivates control signal S1 and causes switch SW1 to become electrically non-conductive. In this way, the system is shut off.

In vehicle 10 configured in the above-described manner, in the case where plug 320 and receptacle 400 are connected together and connector 310 and inlet 270 are connected together and where external charging is not scheduled, charging is started following the sequence as shown in Fig. 3. The case where external charging is not scheduled herein means the case where scheduling information is stored in none of memory 171 of vehicle ECU 170 and memory 407 of house ECU 406.

In contrast, in the case where external charging is scheduled, even when plug 320 and receptacle 400 are connected together and connector 310 and inlet 270 are connected together, charging is not immediately started but started based on a scheduled time (start time or end time). The case where external charging is scheduled herein means the case where scheduling information is stored in at least one of memory 171 of vehicle ECU 170 and memory 407 of house ECU 406.

House ECU 406 controls vehicle 10 through vehicle ECU 170 so that external charging of power storage device 150 is performed in accordance with the scheduling information stored in at least one of memory 171 of vehicle ECU 170 and memory 407 of house ECU 406.

For example, when the current time is before a start time (or a start time calculated from an end time) included in the scheduling information, house ECU 406 does not cause switch SW2 to become an ON state but waits. When the current time reaches the start time, house ECU 406 causes CCID relay 332 to close and causes power conversion device 160 to operate to thereby start external charging of power storage device 150.

In the case where the scheduling information includes an end time, house ECU 406 determines the start time by tracing back the time from the end time by the time required for completing charging (hereinafter referred to as required charging time Treq).

In order for house ECU 406 to correctly determine the start time, it is necessary to know with high accuracy this required charging time Treq. Depending on the type of the vehicle connected to house 450, however, information which is necessary for knowing with high accuracy the required charging time Treq may not be provided.

In view of this, a feature of the present embodiment is that, in the case where the end time of external charging is scheduled at house ECU 406, house ECU 406 transmits the scheduled end time to vehicle ECU 170 and vehicle ECU 170 calculates the required charging time Treq which is required for external charging, based on the end time received by vehicle ECU 170 from house ECU 406.

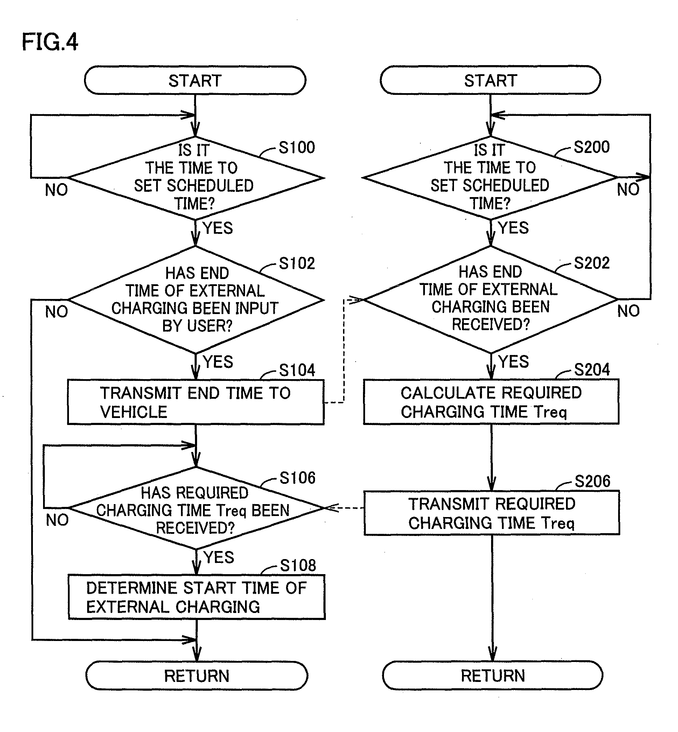

Referring to Fig. 4, a control structure of a program executed by house ECU 406 in the present embodiment will be described.

In step (step will hereinafter be abbreviated as S) 100, house ECU 406 determines whether or not it is the time to set a scheduled time. For example, house ECU 406 may determine that it is the time to set a scheduled time, in the case where a scheduling receiving mode is being activated in which, for example, informing unit 412 is caused to display a scheduling receiving menu for receiving a scheduled time of external charging through user's operation, or in the case where house ECU 406 receives scheduling information from a remote controller or the like through input unit 410.

In the case where it is the time to set a scheduled time (YES in S100), the process proceeds to S102. Otherwise (NO in S100), the process returns to S100. In the case where house ECU 406 has determined that it is the time to set a scheduled time, house ECU 406 may transmit to vehicle ECU 170 a signal indicating that it is the time to set a scheduled time, through the above-described radio communication or wired communication using an electric power line or communication line, for example.

In S102, house ECU 406 determines whether or not an end time of external charging has been input by a user. House ECU 406 may determine that an end time of external charging has been input by a user, in the case for example where a value corresponding to the end time is stored as scheduling information in a predetermined storage area of memory 407. House ECU 406 may also determine that an end time of external charging has not been input by a user, in the case for example where the scheduling receiving mode has been ended without input of an end time. In the case where an end time of external charging has been input by a user (YES in S102), the process proceeds to S104. Otherwise (NO in S102), the process is ended.

In S104, house ECU 406 transmits the input end time to vehicle ECU 170. For example, house ECU 406 transmits the input end time to vehicle ECU 170 through the above-described radio communication or wired communication.

In S106, house ECU 406 determines whether or not required charging time Treq transmitted from vehicle ECU 170 has been received. In the case where required charging time Treq transmitted from vehicle ECU 170 has been received (YES in S106), the process proceeds to S108. Otherwise (NO in S106), the process returns to S106.

In S108, house ECU 406 determines the start time of external charging based on the received required charging time Treq and the end time. Specifically, house ECU 406 determines the start time by tracing back the time from the end time by required charging time Treq. House ECU 406 causes memory 407 to store scheduling information in which the end time and the start time are associated with each other.

Regarding the present embodiment, it has been described that the start time of external charging is determined by tracing back the time from the end time by required charging time Treq. The way to determine the start time, however, is not limited to this operation.

Based on the end time and required charging time Treq, house ECU 406 performs a process for managing the supply and receipt of electric power for an electrical device(s) connected to system power supply 402. The electrical device(s) connected to system power supply 402 herein includes electrical devices in house 450 and electrical devices mounted on vehicle 10.

The process for managing the supply and demand of electric power for an electrical device herein means control of the amount of operation of the electrical device based on a predetermined parameter. The predetermined parameter is herein, for example, the power consumption of the electrical device, the time for use thereof, the cost for use thereof, or the amount of emission of carbon dioxide due to use of the electrical device, or the like.

The control of the amount of operation of the electrical device based on a predetermined parameter includes, for example, control for operating the electrical device in a time zone other than the time zone in which the demand for electric power of system power supply 402 is high, control for operating the electrical device in a time zone in which the cost for use is low, control for adjusting the amount of operation of the electrical device so that the power consumption of a predetermined period will not exceed a target value, and control for adjusting the amount of operation of the electrical device or using an auxiliary power supply other than system power supply 402, so that the amount of emission of carbon dioxide will not exceed a target value.

The auxiliary power supply other than system power supply 402 may be a photovoltaic power generation system, or a power storage device other than power storage device 150 mounted on vehicle 10. Namely, the process for managing the supply and demand of electric power for the electrical device includes control of charging and discharging of a power storage device other than power storage device 150 mounted on vehicle 10.

Next, referring to Fig. 4, a control structure of a program executed by vehicle ECU 170 in the present embodiment will be described.

In S200, vehicle ECU 170 determines whether or not it is the time to set a scheduled time. For example, vehicle ECU 170 may determine that it is the time to set a scheduled time, in the case where a signal indicating that it is the time to set a scheduled time is received from house ECU 406 through the above-described radio communication or wired communication. In the case where it is the time to set a scheduled time (YES in S200), the process proceeds to S202. Otherwise (NO in S200), the process returns to S200.

In S202, vehicle ECU 170 determines whether or not the end time of external charging transmitted from house ECU 406 has been received. In the case where the end time of external charging transmitted from house ECU 406 has been received (YES in S202), the process proceeds to S204. Otherwise (NO in S202), the process returns to S200.

In S204, vehicle ECU 170 calculates required charging time Treq based on SOC_s at the start of charging, SOC_e at the end of charging, battery capacity Q_b, and charging power P_chrg. In the present embodiment, vehicle ECU 170 calculates required charging time Treq using a formula:

$$\text{required charging time Treq} = Q\_b \times (SOC\_e - SOC\_s) / 100 / P\_chrg.$$

The term $Q\_b \times (SOC\_e - SOC\_s) / 100$ corresponds to a required amount of charging power which is required for charging power storage device 150.

Vehicle ECU 170 may determine, for example, the current SOC of power storage device 150 as SOC_s at the start of charging. Alternatively, vehicle ECU 170 may determine SOC_s at the start of charging, based on the received end time. In the case for example where control of charging and discharging, other than the control of charging and discharging for which the end time is scheduled of a power storage device 150 is scheduled before the end time, vehicle ECU 170 may determine, as SOC_s at the start of charging, an estimated value of the SOC of power storage device 150 after the scheduled other control of charging and discharging is completed.

SOC_e at the end of charging may be the SOC corresponding to the full state of charge of power storage device 150, or may be determined by vehicle ECU 170. For example, vehicle ECU 170 may determine SOC_e at the end of charging in accordance with a user's request or based on the state of vehicle 10.

Since battery capacity Q_b decreases with time due to degradation, vehicle ECU 170 updates battery capacity Q_b at a predetermined timing (at the time when external charging is ended for example). Vehicle ECU 170 calculates battery capacity Q_b based on a difference between the SOC before charging and the SOC after charging, and an amount of charging based on the charging current.

Vehicle ECU 170 determines, as charging power P_chrg, a smaller one of the upper limit of electric power that can be supplied to vehicle 10 from house 450 serving as a charging device and the upper limit of electric power that can be received by power storage device 150. Vehicle ECU 170 may identify the upper limit of electric power that can be supplied from house 450 to vehicle 10, based on the rated current of which vehicle ECU 170 is informed by control pilot circuit 334 as described above, or vehicle ECU 170 may receive from house ECU 406 a signal representing the upper limit of electric power that can be supplied from house 450 to vehicle 10 through the above-described radio communication or wired communication.

In S206, vehicle ECU 170 transmits the calculated required charging time Treq to house ECU 406.

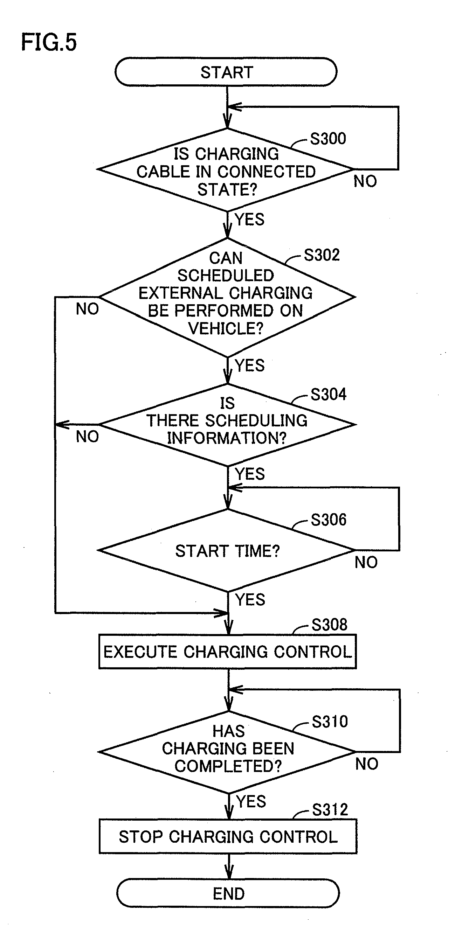

Next, referring to Fig. 5 a control structure of a program of a scheduled charging process executed by house ECU 406 will be described.

In S300, house ECU 406 determines whether or not charging cable 300 is connected to vehicle 10 and whether or not charging cable 300 is connected to house 450. In the case where plug 320 and receptacle 400 are connected together and connector 310 and inlet 270 are connected together, vehicle ECU 170 transmits a signal indicating that charging cable 300 is in the connected state, to house ECU 406 using the above-described radio communication or wired communication.

In the case where house ECU 406 has received from vehicle ECU 170 the signal indicating that charging cable 300 is in the connected state, house ECU 406 determines that charging cable 300 is in the connected state.

In the case where charging cable 300 is in the connected state (YES in S300), the process proceeds to S302. Otherwise (NO in S300), the process returns to S300.

In S302, house ECU 406 determines whether or not vehicle 10 is a vehicle on which scheduled external charging can be performed. When charging cable 300 is in the connected state, vehicle ECU 170 transmits through the above-described radio communication or wired communication to house ECU 406, vehicle information to be used for identifying whether or not the vehicle can undergo scheduled external charging. Based on the vehicle information received from vehicle ECU 170, house ECU 406 determines whether vehicle 10 is a vehicle on which scheduled external charging can be performed.

In the case where vehicle 10 is a vehicle on which scheduled external charging can be performed (YES in S302), the process proceeds to S304. Otherwise (NO in S302), the process proceeds to S308.

In S304, house ECU 406 determines whether or not scheduling information is stored in memory 407. In the case where scheduling information is stored in memory 407 (YES in S304), the process proceeds to S306. Otherwise (NO in S304), the process proceeds to S308.

In S306, house ECU 406 determines whether or not the current time is a start time included in the scheduling information. In the case where the current time is the start time (YES in S306), the process proceeds to S308. Otherwise (NO in S306), the process returns to S306.

In S308, house ECU 406 executes charging control. Specifically, house ECU 406 closes CCID relay 332 through vehicle ECU 170 and also causes, through vehicle ECU 170, power conversion device 160 to operate to thereby cause external charging of power storage device 150 to be performed.

In S310, house ECU 406 determines whether or not charging has been completed. For example, house ECU 406 may determine that charging has been completed in the case where the current time is the end time. Alternatively, house ECU 406 may determine that charging has been completed, in the case where the SOC of power storage device 150 is a threshold value or more that corresponds to a full state of charge of power storage device 150. In the case where charging has been completed (YES in S310), the process proceeds to S312. Otherwise (NO in S310), the process returns to S310.

In S312, house ECU 406 stops the charging control. Specifically, house ECU 406 stops the operation of power conversion device 160 through vehicle ECU 170 and also causes CCID relay 332 to become a non-electrically-conducting state through vehicle ECU 170.

The operation of each of vehicle ECU 170 and house ECU 406 in the present embodiment will be described based on the above-described structures and flowcharts.

<Determination of Start Time>

It is supposed for example that a scheduling receiving menu for external charging is displayed on informing unit 412 by user's operation of input unit 176 of house 450 (YES in S100, YES in S200). In the case where the user inputs an end time to input unit 176 (YES in S102), house ECU 406 transmits the input end time to vehicle ECU 170 (S104).

In the case where vehicle ECU 170 has received the end time from house ECU 406 (YES in S202), vehicle ECU 170 calculates required charging time Treq based on SOC_s at the start of charging, SOC_e at the end of charging, battery capacity Q_b, charging power P_chrg, and the above-indicated formula (S204).

Vehicle ECU 170 transmits the calculated required charging time Treq to house ECU 406 (S206). In the case where house ECU 406 has received required charging time Treq from vehicle ECU 170 (YES in S106), house ECU 406 determines the start time of external charging by tracing back the time from the end time by required charging time Treq (S108).

<Execution of Scheduled Charging Process>

In the case where charging cable 300 is connected to both vehicle 10 and house 450 (YES in S300) and where vehicle 10 is a vehicle on which scheduled external charging can be performed (YES in S302), house ECU 406 immediately executes charging control (S308) if scheduling information is not stored in memory 407 (NO in S304).

In contrast, in the case where scheduling information is stored in memory 407 (YES in S304), house ECU 406 waits until the current time reaches the start time (NO in S306). When the current time reaches the start time (YES in S306), house ECU 406 executes charging control (S308). When the current time reaches the end time, it is determined that charging is completed (YES in S310), and house ECU 406 stops the charging control (S312).

As heretofore described, in charging system 1 of the present embodiment, house ECU 406 transmits an input end time of external charging to vehicle ECU 170, and vehicle ECU 170 calculates the required charging time which is required for external charging. Accordingly, the need can be eliminated for house ECU 406 to know the information which is based on the state of the vehicle (such as the state of the power storage device) and necessary for calculating the required charging time (the information is namely the information by which the required charging amount can be identified). As a result, the load on house ECU 406 can be lessened. Furthermore, since vehicle ECU 406 knows the state of vehicle 10 which is necessary for calculating the required charging time, vehicle ECU 170 can calculate the required charging time with high accuracy. Consequently, the charging schedule can appropriately be adjusted. Thus, the charging system and the charging scheduling method can be provided by which the required amount of charging power for the power storage device mounted on the vehicle is calculated with high accuracy.

Furthermore, since it is unnecessary for vehicle ECU 406 to provide to house ECU 406 the information which is based on the state of the vehicle and necessary for calculating the required charging time, transmission of information including know-how and the like from vehicle ECU 170 to house ECU 406 can be avoided.

Regarding the present embodiment, it has been described that required charging time Treq is calculated based on SOC_s at the start of charging, SOC_e at the end of charging, battery capacity Q_b, charging power P_chrg, and the above-indicated formula used for calculating required charging time Treq. Vehicle ECU 170, however, may calculate required charging time Treq based on at least one of the SOC of power storage device 150, the upper limit of charging power which can be supplied from house 450 to power storage device 150, the upper limit of charging power which can be received by power storage device 150, and full charging capacity Q_b of power storage device 150. Vehicle ECU 170 may also calculate required charging time Treq based on SOC_s at the start of charging, SOC_e at the end of charging, and a predetermined map. The predetermined map is herein a map indicating a relation between a difference between the SOC before charging and the SOC after charging and required charging time Treq.

Furthermore, house ECU 406 may determine the end time of external charging based on a scheduled departure time of vehicle 10 that has been input by a user. House ECU 406 may determine the end time of external charging by tracing back the time, by a predetermined time, from the scheduled departure time of vehicle 10 that is input by the user, for example. Alternatively, house ECU 406 may transmit to vehicle ECU 170 the scheduled departure time of vehicle 10 input by the user, as the end time of external charging.

House ECU 406 can obtain the accurate required charging time from vehicle ECU 170. Therefore, in the case where house ECU 406 performs a process for managing the supply and demand of electric power for an electrical device, house ECU 406 can appropriately adjust the charging schedule in consideration of the supply and demand of electric power for other electrical devices. Thus, external charging of power storage device 150 can be performed while control is performed for optimization of power consumption of other electrical devices connected to system power supply 402 of house 450 (the control is namely management of electric power for the purpose of reducing the power consumption or reducing the amount of $CO_2$ emission for example).

Regarding the present embodiment, it has been described that house ECU 406 determines the start time of external charging based on the required charging time which house ECU 406 has received from vehicle ECU 170. The start time of external charging, however, may be determined by vehicle ECU 170. For example, vehicle ECU 170 may determine the start time based on the calculated required charging time and the end time. Then, vehicle ECU 170 may transmit the determined start time to house ECU 406 or vehicle ECU 170 may perform external charging of power storage device 150 at the start time.

It should be construed that the embodiments disclosed herein are by way of illustration in all respects, not by way of limitation. It is intended that the scope of the present invention is defined by claims, not by the description above, and encompasses all modifications and variations equivalent in meaning and scope to the claims.

REFERENCE SIGNS LIST

1 charging system; 10 vehicle; 20 drive unit; 130 drive wheel; 140 engine; 145 power split device; 150 power storage device; 155, 332 relay; 160 power conversion device; 170 vehicle ECU; 171, 407 memory; 172, 404 PLC device; 174, 408 radio communication device; 176, 410 input unit; 178, 412 informing unit; 180 motor driver; 182, 604, 650 voltage sensor; 241, 341, 441, ACL1, ACL2 electric power line; 270 inlet; 300 charging cable; 310 connector; 312 connection detecting circuit; 320 plug; 334 control pilot circuit; 340, 340A, 340B electric power line unit; 400 receptacle; 402 system power supply; 406 house ECU; 414 switch unit; 416 electrical load; 450 house; 502 resistor circuit; 504, 506, 504, 506 input buffer; 511 power supply node; 512 vehicle earth; 602 oscillation device; 606 electromagnetic coil; 608 electrical leakage detector; 610 CCID control unit; 660 current sensor

**Claims**

1. A charging system comprising:

   a vehicle (10) including a power storage device (150) for supplying electric power to an electric motor (120) serving as a driving source, and a first control device (170) for controlling charging of said power storage device; and
   a charging device (450) including a power supply (402) provided outside said vehicle, and a second control device (406) for controlling external charging of said power storage device by means of said power supply, wherein
   in a case where an end time of said external charging is input to said second control device, said second control device transmits said input end time to said first control device, and
   in a case where said first control device receives said end time from said second control device, said first control device calculates a required charging time which is required for said external charging.

2. The charging system according to claim 1, wherein
   said first control device transmits said calculated required charging time to said second control device, and
   said second control device determines a start time of said external charging based on said end time and said required charging time received from said first control device, and starts said external charging at said determined start time.

3.  The charging system according to claim 1, wherein
    said first control device transmits said calculated required charging time to said second control device, and
    said second control device performs a process for managing supply and receipt of electric power for an electrical
    device connected to said power supply, based on said end time and said required charging time received from said
    first control device.

4.  The charging system according to claim 1, wherein
    said first control device determines a start time of said external charging based on said end time and said calculated
    required charging time.

5.  The charging system according to claim 1, wherein
    said first control device calculates said required charging time based on at least one of a remaining capacity of said
    power storage device, an upper limit of charging power that can be supplied from said charging device to said power
    storage device, an upper limit of charging power that can be received by said power storage device, and a full
    charging capacity of said power storage device.

6.  The charging system according to claim 1, wherein
    said second control device determines said end time based on a scheduled departure time of said vehicle that is
    input by a user.

7.  The charging system according to claim 1, wherein
    said charging device is a part of a power management system for adjusting power consumption of at least one of
    a plurality of electrical devices connected to said power supply.

8.  A charging scheduling method using a charging system comprising:

    a vehicle (10) including a power storage device (150) for supplying electric power to an electric motor (120)
    serving as a driving source and a first control device (170) for controlling charging of said power storage device;
    and
    a charging device including a power supply (402) provided outside said vehicle and a second control device
    (406) for controlling external charging of said power storage device by means of said power supply,

    said method comprising the steps of:

    transmitting by said second control device, in a case where an end time of said external charging is input to
    said second control device, said input end time to said first control device; and
    calculating by said first control device, in a case where said first control device receives said end time from said
    second control device, a required charging time which is required for said external charging.

FIG.1

| VEHICLE 10 | CHARGING CABLE 300 | HOUSE 450 |

MOTOR DRIVER

POWER CONVERSION DEVICE

PLC DEVICE

PLC DEVICE

VEHICLE ECU

INFORMING UNIT

INPUT UNIT

RADIO COMMUNICATION DEVICE

HOUSE ECU

RADIO COMMUNICATION DEVICE

INPUT UNIT

INFORMING UNIT

ELECTRICAL LOAD

PLC DEVICE

PILOT SIGNAL CPLT

CONNECTION SIGNAL CNCT

15

FIG.2

FIG.3

FIG.4

```
        ┌─────────────────┐              ┌─────────────────┐
        │      START      │              │      START      │
        └────────┬────────┘              └────────┬────────┘
                 │                                 │
         ┌───────▼───────┐  S100           ┌───────▼───────┐  S200
         │     IS IT     │                 │     IS IT     │
   NO    │  THE TIME TO  │            NO   │  THE TIME TO  │
  ◄──────│ SET SCHEDULED │        ◄────────│ SET SCHEDULED │
         │     TIME?     │                 │     TIME?     │
         └───────┬───────┘                 └───────┬───────┘
              YES│                              YES│
         ┌───────▼───────┐  S102           ┌───────▼───────┐  S202
         │    HAS END    │                 │    HAS END    │
   NO    │TIME OF EXTERNAL│           NO   │TIME OF EXTERNAL│
  ◄──────│CHARGING BEEN INPUT│      ◄──────│CHARGING BEEN  │
         │   BY USER?    │                 │   RECEIVED?   │
         └───────┬───────┘                 └───────┬───────┘
              YES│            S104              YES│           S204
         ┌───────▼───────────┐           ┌───────▼───────────┐
         │TRANSMIT END TIME TO│          │ CALCULATE REQUIRED │
         │VEHICLE            │           │CHARGING TIME Treq  │
         └───────┬───────────┘           └───────┬───────────┘
                 │                                 │
         ┌───────▼───────┐  S106                   │          S206
         │ HAS REQUIRED  │               ┌─────────▼─────────┐
   NO    │CHARGING TIME Treq BEEN│       │ TRANSMIT REQUIRED │
  ◄──────│   RECEIVED?   │◄─────────────│CHARGING TIME Treq  │
         └───────┬───────┘               └─────────┬─────────┘
              YES│            S108                  │
         ┌───────▼───────────┐                      │
         │DETERMINE START TIME OF│                  │
         │EXTERNAL CHARGING  │                      │
         └───────┬───────────┘                      │
                 │                                   │
        ┌────────▼────────┐              ┌──────────▼──────┐
        │     RETURN      │              │     RETURN      │
        └─────────────────┘              └─────────────────┘
```

18

FIG.5

```
                    ┌──────────────────────┐
                    │        START         │
                    └──────────┬───────────┘
                               │◄──────────────────┐
                               ▼         S300       │
                        ╱─────────────╲             │
                       ╱  IS CHARGING  ╲            │
                      ◄ CABLE IN CONNECTED╲─────────┘
                       ╲    STATE?       ╱  NO
                        ╲───────┬───────╱
                                │YES
                                ▼
                        ╱─────────────╲  S302
                       ╱     CAN       ╲
                      ╱   SCHEDULED     ╲
          NO         ◄ EXTERNAL CHARGING ╲
         ◄───────────  BE PERFORMED ON    ╲
                       ╲    VEHICLE?      ╱
                        ╲───────┬───────╱
                                │YES
                                ▼
                        ╱─────────────╲  S304
                       ╱      IS       ╲
          NO          ◄ THERE SCHEDULING╲
         ◄───────────  INFORMATION?     ╱
                        ╲───────┬───────╱
                                │YES
                                ▼◄──────────────────┐
                        ╱─────────────╲  S306        │
                       ╱               ╲             │
                      ◄  START TIME?     ╲────────────┘
                       ╲               ╱  NO
                        ╲───────┬───────╱
                                │YES
                                ▼
                    ┌──────────────────────┐ S308
                    │ EXECUTE CHARGING CONTROL│
                    └──────────┬───────────┘
                               │◄──────────────────┐
                               ▼                   │
                        ╱─────────────╲  S310       │
                       ╱     HAS       ╲            │
                      ◄ CHARGING BEEN   ╲───────────┘
                       ╲  COMPLETED?    ╱  NO
                        ╲───────┬───────╱
                                │YES   S312
                                ▼
                    ┌──────────────────────┐
                    │  STOP CHARGING CONTROL│
                    └──────────┬───────────┘
                               ▼
                    ┌──────────────────────┐
                    │         END          │
                    └──────────────────────┘
```

## INTERNATIONAL SEARCH REPORT

International application No.

PCT/JP2011/077364

### A. CLASSIFICATION OF SUBJECT MATTER
*H02J7/04*(2006.01)i, *H02J7/00*(2006.01)i, *H02J7/10*(2006.01)i

According to International Patent Classification (IPC) or to both national classification and IPC

### B. FIELDS SEARCHED

Minimum documentation searched (classification system followed by classification symbols)
H02J7/04, H02J7/00, H02J7/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2009-118652 A (The Chugoku Electric Power Co., Inc.), 28 May 2009 (28.05.2009), entire text; all drawings (Family: none) | 1-8 |
| A | JP 2007-295717 A (The Chugoku Electric Power Co., Inc.), 08 November 2007 (08.11.2007), entire text; all drawings (Family: none) | 1-8 |
| A | WO 2011/007573 A1 (Panasonic Corp.), 20 January 2011 (20.01.2011), entire text; all drawings (Family: none) | 1-8 |

☐ Further documents are listed in the continuation of Box C.   ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 20 February, 2012 (20.02.12) | 28 February, 2012 (28.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

**Patent documents cited in the description**

- JP 2009136109 A